# EUROPEAN PATENT APPLICATION

(11) **EP 4 807 637 A1**
(43) Date of publication of application: **16.09.2026**
(21) Application number: 25163467.1
(22) Date of filing: 13.03.2025
(51) Int. Cl.: G06Q 10/04, G06Q 10/047, G06Q 10/0631, G06Q 10/08

(54) **ACCESS MANAGEMENT FOR AN AUTOMATED STORAGE AND RETRIEVAL SYSTEM**

(71) Applicant: AutoStore Technology AS, 5578 Nedre Vats (NO)
(72) Inventor: Fagerland, Ingvar, 5578 Nedre Vats (NO)
(74) Representative: Kilburn & Strode LLP

(57) **Abstract**

The disclosure relates to a computer-implemented method for managing access within an automated storage and retrieval system, ASRS. The method comprises controlling access to a first area of the ASRS based on a first owner ID associated with the first area.

## Description

### TECHNICAL FIELD

The disclosure relates to an access management. More particularly, it relates to a method and computer-readable medium for managing access within an automated storage and retrieval system (ASRS).

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an ASRS in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

There are many possible reasons why it may be desirable to manage access to certain areas of the ASRS at any point in time, for example to control the access of container-handling vehicles to any "problem areas" of the ASRS. Areas of the ASRS may be blocked in order to perform certain processes, for example cleaning, maintenance, or repair. Alternatively, a particular user may want to block an area of the ASRS for a reason unrelated to a process. For example, a user may need to block an area of the ASRS due to a container-handling vehicle malfunctioning in that area. The area of the ASRS may be blocked/locked such that container-handling vehicles cannot access the area. Blocking such areas leads to improved safety of the ASRS. For example, it prevents collisions of the container-handling vehicles with any processes inside the restricted area.

Previous implementations required a large proportion or all of the ASRS to be shut down in order for such processes to take place or for problems to be solved. This means that the ASRS may be shut down for longer and in a larger area than necessary, leading to time and space inefficiencies in the ASRS. Other previous implementations allowed for managing the access of each cell of the ASRS individually. It can be time-consuming to manage the access of multiple individual cells at once, for example in the case of a large area of the ASRS needing to be blocked off. These implementations also did not allow for overlapping regions of the ASRS to be blocked, for example for different reasons. Previous implementations allow for an area of the ASRS to be either blocked or not blocked, and this can result in areas of the ASRS remaining blocked for a longer period of time than necessary and reduces the efficiency of the ASRS.

One or more aspects of the invention of the present application are set out in the claims.

### SUMMARY

Aspect(s) of the present disclosure are set out in the independent claim(s). Other aspects and features of the present disclosure are set out in the dependent claims and in the description below.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 is a flowchart depicting a method according to the present disclosure;
Fig. 6 is a flowchart depicting a method according to the present disclosure;
Fig. 7 is a flowchart depicting a method according to the present disclosure;
Fig. 8 depicts a schematic of example areas of the automated storage and retrieval system.

### DETAILED DESCRIPTION

In overview, the present disclosure relates to controlling access to an area in an ASRS, associating the area with an owner ID.

Preventing access of vehicles within, into, or out of an area of the ASRS is necessary to allow for processes, such as cleaning or maintenance to take place safely and efficiently in the ASRS, without needing to shut down the whole ASRS. The area is associated with an owner ID, which can be associated with a process or a certain user of the system. Associating the area with an owner ID means it is easier to identify the user that implemented the lock on the area and/or what process is being performed in the area, and therefore makes it easier to manage access and lock conflicts, including knowing when a lock on the area can be lifted. Multiple locks can be applied to areas of the ASRS at any given time and two or more of these areas may overlap. The multiple locks may each be associated with different owner IDs. When two areas associated with locks overlap, rules govern the effect of the removal on the remaining lock, such that, for example, removing one of the locks leaves the other unaffected.

This overview is provided to introduce, in simplified form, a selection of concepts that are further described herein. The presence of a feature in this overview does not imply that the feature is essential to the disclosure.

The present disclosure will now be described in general terms before implementations of the disclosure are described by way of example with reference to the drawings. The word "may" is used to refer to a feature that is optional, i.e. in some implementations of the disclosure, the feature is present, and in some implementations of the disclosure, the feature is not present.

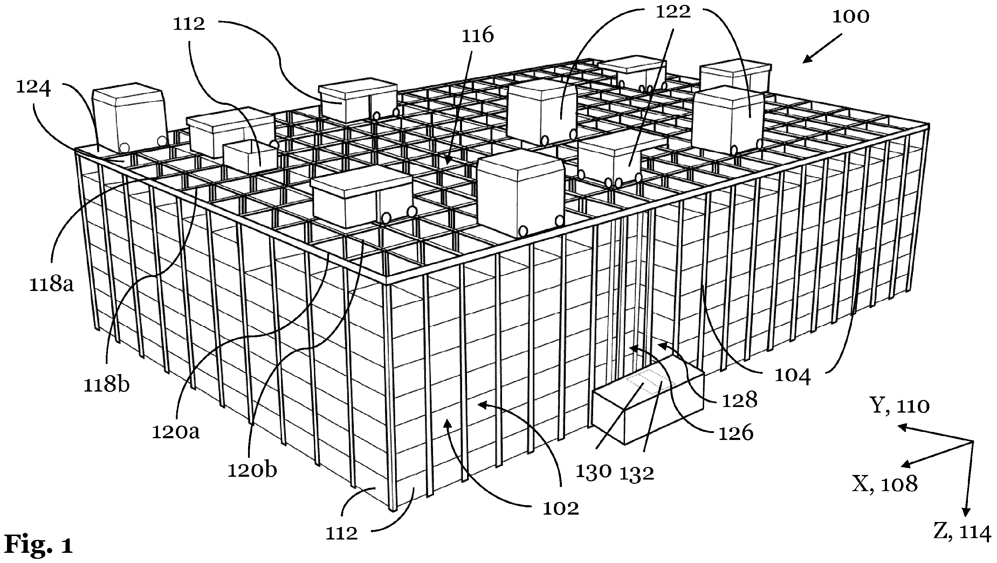

Fig. 1 shows an ASRS, wherein the ASRS comprises a grid 100. The grid 100 may comprise a grid frame, wherein the grid frame comprises one or more vertical storage columns 102, forming a volume of storage cells.

Referring to the embodiment shown in Fig. 1, the grid 100 comprises a frame formed by a plurality of generally rectilinear, adjacent vertical storage columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

The grid 100 may comprise a rail system. The rail system may comprise a first set of parallel rails arranged in a horizontal plane and extending in a first direction. The first direction may be either the X or Y directions 108, 110. The rail system may comprise a second set of parallel rails arranged in the horizontal plane and extending in a second direction which is orthogonal to the first direction. The second direction may be either the X or Y directions 108, 110. If the first direction is the X direction 108, the second direction is the Y direction 110. Similarly, if the first direction is the Y direction 110, the second direction is the X direction 108.

The grid may comprise at least one container-handling vehicle that is configured to move along the two sets of parallel rails of the rail system of the grid. A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

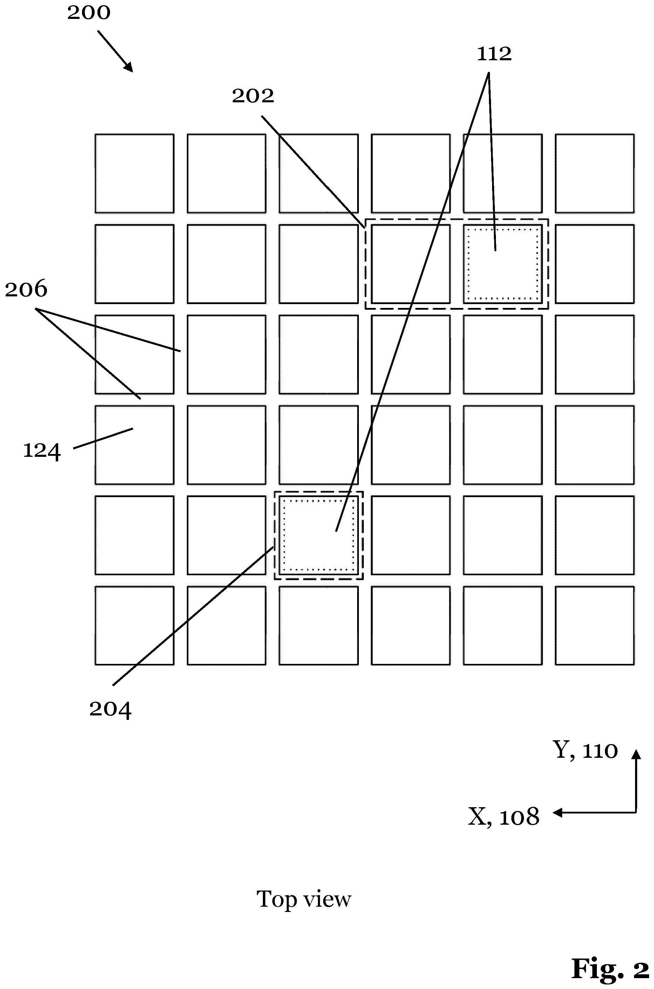

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

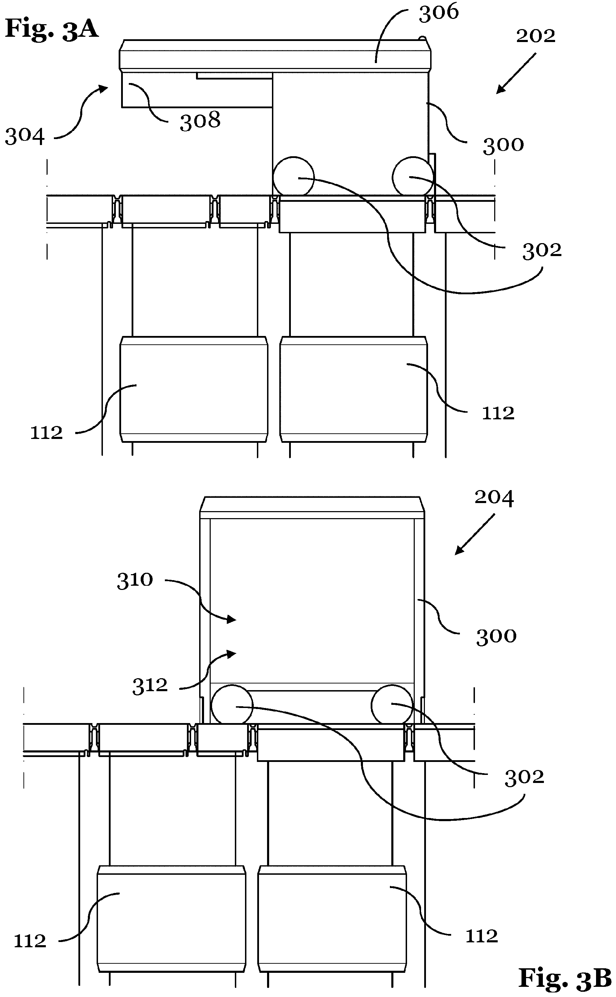

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

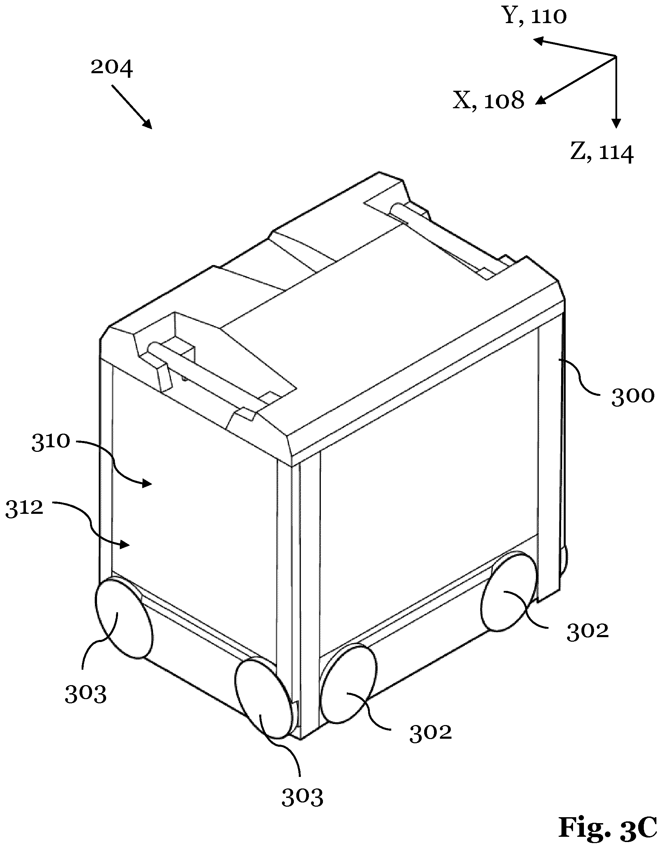

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

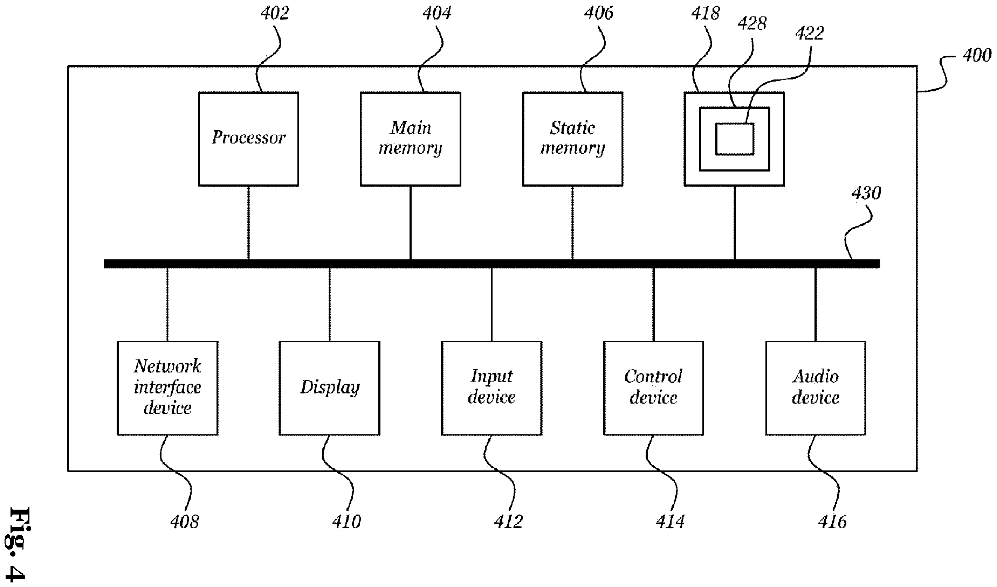

Control and monitoring of the ASRS, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer-readable medium comprises instructions which, when executed by one or more processors, cause the one or more processors 402 to perform the method of any preceding claim. The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical storage column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

According to an aspect of the invention, a computer-implemented method is provided for managing access within an automated storage and retrieval system, ASRS. The method comprises controlling access to a first area of the ASRS based on a first owner ID associated with the first area.

Controlling access to certain areas of the grid allows for processes to be safely and efficiently performed in those areas, for instance by enabling control of the movement of vehicles in relation to those areas, whilst allowing other areas of the grid to operate as normal. This prevents the need for a full grid shut down for processes to happen in certain areas and improves grid efficiency by allowing different areas of the grid to be controlled separately. Safety is also improved by controlling the access of vehicles into and out of these areas. Also, associating controlled areas of the grid with an owner ID allows for improved user knowledge on why certain areas are locked and by whom. This allows easier, more efficient and more informed management of access in the system.

The first owner ID may comprise a process associated with the ASRS, or a user ID. The process associated with the ASRS may be a process related to cleaning, maintenance or repair of the grid. The user ID may be some identification of a user who is responsible for controlling the access to the area.

Controlling access to a first area may comprise associating the first owner ID with a lock restricting access to the first area. Applying a lock to areas of the grid allows for the movement of vehicles in the area to be dynamically and intelligently controlled, therefore reducing the likelihood of the robots colliding with any processes happening inside the area.

The computer-implemented method may further comprise removing the lock so that access into and out of the first area is unaffected by the lock. The lock may be removed when the process inside the area is finished, or it is otherwise deemed safe for vehicles to move in the area. This allows for the availability of areas of the grid to be dynamically updated and therefore leads to improved efficiency of the grid.

The lock may comprise an access-in lock prohibiting access into the first area, and allowing access out of the first area. This allows for vehicles to leave the area, for example in preparation for a process to take place in the area.

The lock may comprise an access-all lock prohibiting access into and out of the first area. This prevents vehicle movement into and out of the area, so as to reduce the likelihood of any vehicles colliding with processes, or otherwise dangerous areas, of the grid.

The access may be of a vehicle moveable within the ASRS. This vehicle could be a container-handling vehicle, robot picker or other vehicle.

Identifying the first area of the ASRS may use a first coordinate and a second coordinate. Identifying the area with coordinates allows for the area to be defined precisely and more efficiently, and allows flexibility in defining different overall area shapes, so that the controlled region is defined precisely.

The first area may be comprised of one or more rectangular shapes. In an example where the storage cells of the grid are substantially square, the first area may be quadrilateral. The first area may be comprised of multiple cells, allowing for efficient controlling of multiple cells associated with a process or user at once. Allowing the first area to be multiple rectangular shapes allows for a wide range of shapes to be defined on the grid, allowing flexibility in the choice of area to control without wasting space which could otherwise be utilised in grid operation.

The computer-implemented method may further comprise controlling access to a second area based on a second owner ID associated with a second area. Controlling access to multiple areas of the grid allows for improved efficiency in terms of being able to dynamically lock different areas without shutting down the whole grid. It also allows different areas to be locked for different processes and/or by different users.

The lock may be a first lock, and controlling access comprises associating the second owner ID with a second lock restricting access to the second area.

Controlling access to the first area may comprise applying a first lock to the first area. Controlling access to the second area may comprise applying a second lock to the second area, and wherein, when the first and second areas overlap, may comprise removing either the first or second lock leaving the remaining lock unaffected. This means that multiple locks can be applied to an overlapping area, but the locks can be controlled individually. This leads to improved safety, as any lock on the overlapping area will remain when other locks are removed.

The ASRS may comprise a grid having a grid frame formed by first vertical storage column forming a storage volume of storage cells. The grid may comprise a rail system having a first set of parallel rails arranged in a horizontal plane and extending in a first direction. The grid may have a second set of parallel rails arranged in the horizontal plane and extending in a second direction which is orthogonal to the first direction. The grid may comprise at least one container-handling vehicle that is configured to move along the two sets of parallel rails of the rail system of the grid. The first area may comprise one or more storage cells of the ASRS.

According to another aspect of the invention, a computer-readable medium is provided, comprising instructions which, when executed by one or more processors, cause the one or more processors to perform the method of any one of the preceding claims.

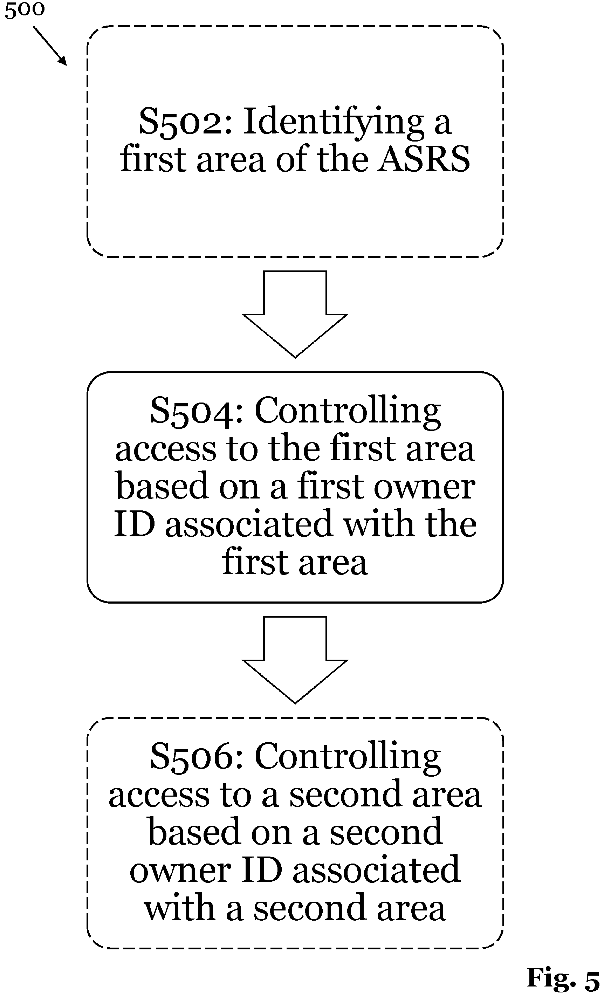

Fig. 5 depicts a method 500 according to the present disclosure. Optional steps of the method 500 are shown with a dashed outline in Fig. 5.

The method 500 is a computer-implemented method for managing access within an ASRS. Step 502 of method 500 comprises identifying a first area of the ASRS. The first area can be any suitable arbitrary shape. The first area comprises one or more storage cells of the ASRS, with the storage cells themselves being any arbitrary shape that is suitable for the ASRS. The first area comprises one or more rectangular shapes, for example if there are more storage cells extending in a first direction than in a second direction in the first area. Alternatively, the first area may be square in shape, for example if the first area comprises one storage cell of the ASRS or if there are an equal number of storage cells extending in the first direction and second direction of the grid 100. The first area may comprise multiple rectangular shapes.

Step 502 comprises identifying the first area of the ASRS using a first coordinate and a second coordinate. The first coordinate relates to a position in the first direction or second direction and similarly, the second coordinate relates to a position in the first direction or second direction of the grid 100. The coordinate is related to an extent of the first area in the first direction or second area in the grid 100. If the first area is a rectangular shape, the first coordinate and second coordinate may be the coordinates of two opposing corners of the rectangle. The first coordinate and second coordinate may be related to a first direction X 108 and/or a second direction Y 110, for example the first coordinate and/or second coordinate may be in the form (X 108, Y 110). As an example, a first area may be defined by the first coordinate (2, 4) and second coordinate (5, 2), in order to define a rectangle comprised of 6 cells, with 3 cells extending in the X 108 direction and 2 cells extending in the Y 110 direction.

If the first area is formed by multiple shapes, the first area may comprise more than two coordinates. When multiple shapes are present in an area, the coordinates are stored in a list. The first area may comprise a third coordinate, a fourth coordinate and so on. For example, a first area comprising two rectangles may comprise a first coordinate, a second coordinate, a third coordinate and a fourth coordinate e.g. a (2, 4), (5, 2), (3, 4), (2, 5).

Alternatively, the first area is defined by other metrics, for example if the first area comprises one or more non-quadrilateral shapes. The first area is then defined by one or more parameters indicating the size of the shapes, and/or one or more parameters defining the position of the shapes. For example, if the first area comprises one or more circles, the first area may be identified using a position coordinate parameter indicating the central coordinate of the circle and a size parameter value indicating the radius/diameter of the circle.

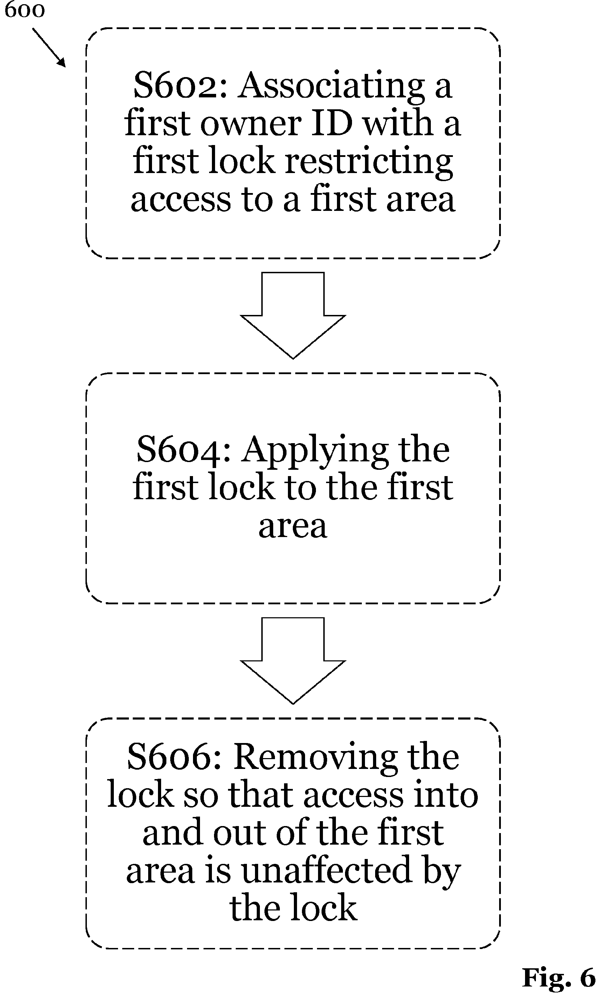

Step 504 comprises controlling access to a first area of the ASRS based on a first owner ID associated with the first area. Further details of optional steps involved in step 504 of Fig. 5 will be discussed in relation to the steps in Fig. 6.

The first owner ID is usable to identify the 'first owner'. The first owner may be a process, a user of the ASRS, or other identifiers, or combinations thereof. The first owner ID may comprise a process associated with the ASRS. The process associated with the ASRS may be a process related to the grid 100. For example, the process may be associated with cleaning, repairing, or maintaining part of the grid 100. The process may be associated with other elements of the ASRS, for example the process may be associated with repairing a broken-down vehicle in the first area. The user ID may be associated with a person who manages aspects of the ASRS. This user may have particular authority to control access to areas of the ASRS over other at least some other users of the ASRS, for example the user may be a "super user" of the ASRS. In one aspect, the user controls access to a first area for a reason unrelated to a process. For example, the user may wish to control access to a first area based on traffic optimisation of the ASRS, or for preventative measures.

Alternatively, the first owner ID comprises an ID associated with a reason for controlling access to a first area. The reason may be associated with a purpose or user. For example, the purpose may be due to a broken down vehicle in the first area.

The first owner ID may be a value associated with, or identifying, the first owner. The value associated with the first owner takes any suitable value, such as an integer, decimal, string or binary value. Processes associated with the ASRS are associated with a value, such as an integer, decimal, string or binary value. Similarly, user IDs are associated with a value, such as an integer, decimal, string or binary value.

As an example, each process of the ASRS is assigned an integer. The cleaning process is assigned an integer value of '1', the maintenance process is assigned an integer value of '2' and the repair process is assigned an integer value of '3', and so on. In one aspect, these variables may be stored in the main memory 404 or static memory 406 of the processing system 400. The variables may be stored in a list and retrieved by accessing the list. In a similar way, each user of the system or a group of users of the system may be assigned an integer in order to identify the user or group of users of the system. Different owner IDs are listed and displayed to users of the ASRS using a user interface. A user of the ASRS can choose to associate an owner ID with an area of the ASRS by choosing an owner ID and applying it to a selected area.

Alternatively, the first owner ID may comprise two or more values. The first owner ID may comprise two or more of a process associated with the ASRS, a user ID, or a purpose ID. The first owner ID comprises a combination of these IDs. As an example, a first owner ID may comprise a user ID and a purpose ID, where the first owner ID is a value of '1' and the purpose ID is the string 'fault'. This could present to the user in the format of '(1, fault)', for example, when they hover over or click on the first area in the routing system and/or the processing system 400.

In controlling access to the first area of the ASRS based on a first owner ID associated with the first area, the access may be of a vehicle moveable within the ASRS. The vehicle may be a container-handling vehicle, a robot picker, or other vehicle. Controlling access to the first area may comprise preventing and/or allowing movement of one or more vehicles inside, into and/or out of the first area. More details on this will be discussed in relation to applying locks, as discussed with reference to Fig. 6. Controlling access of a vehicle to the first area improves safety and efficiency of the ASRS, by preventing robot collisions with processes or problems inside the first area. Also, the controlling access could be extended to controlling access of a person (for example performing maintenance) to the first area, improving safety of the ASRS, by preventing injuries to the person as a result of coming into contact with, say, vehicles associated with the process or problem in the first area.

Step 506 comprises controlling access to a second area based on a second owner ID associated with a second area. Further details of steps involved in step 506 of Fig. 5 will be discussed in relation to the steps in Fig. 6. The first area and second area are any suitable areas of the ASRS. The first area and second area are referred to more generally each as an area of the ASRS. Similarly, the first owner ID and second owner ID are referred to more generally as an owner ID. Controlling access to the second area is performed in substantially the same way to controlling access to the first area. The description with respect to step 504 of Fig. 5 applies to step 506 of Fig. 5. The second owner ID may comprise a process associated with the ASRS, or a user ID. In controlling access to the second area of the ASRS based on a second owner ID associated with the second area, the access may be of a vehicle moveable within the ASRS.

Fig 6 depicts a method 600 according to the present disclosure. Optional steps of the method 600 are shown with a dashed outline in Fig. 6. Step 504 of Fig. 5 may comprise one or more of step 602, step 604 or step 606 of Fig. 6.

Controlling access to the first area of the ASRS based on a first owner ID associated with the first area comprises associating the first owner ID with a lock that acts to restrict access to the first area. For example, in one aspect, when, in the ASRS the lock is present and associated with the area, the ASRS's routing of vehicles (for example using the ASRS's routing system into which the lock is added or integrated) with respect to that area is restricted according to the lock. Step 602 comprises controlling access comprising associating the first owner ID with a lock restricting access to the first area. In other words, the lock can be used to stop a vehicle being routed in the ASRS from moving inside, entering and/or exiting the first area. Restricting access to the first area may result in rerouting the movement of vehicles on the grid via the ASRS routing system, so vehicles do not enter into the first area.

The lock may comprise an access-in lock prohibiting access into the first area, and allowing access out of the first area. In other words, an access-in lock restricts or prevents movement into the first area. For example, an access-in lock may be applied to a first area if there are already vehicles in the first area, such that any vehicles already in the first area are still able to safely exit the area.

The lock may comprise an access-all lock prohibiting access into and out of the first area. The access-all lock may also prohibit movement of vehicles inside the first area. An access-all lock may be applied to the first area when there is no vehicles and/or people inside the first area. An access-in lock may be applied to the first area, such that any vehicles in the first area can leave the first area, and then the access-all lock may be applied after the access-in lock, such that no vehicles can move inside the first area. The access-all lock may be used for more inherently dangerous processes, in which any movement inside the first area would be unsafe. For example, if rails within a first area were being repaired, it would be unsafe for any vehicles to move within the first area, and applying an access-in lock may not be sufficient for safety.

In another aspect, the lock comprises one or more other types of lock. For example, the lock may comprise a lock prohibiting access out of the first area, and allowing access into the first area. The lock may comprise a lock that prohibits any movement inside the first area, but permits movement into and/or out of the first area. In other words, the lock may be used for any combination of preventing movement into, inside or out of the first area.

The locks, such as the access-in and access-all lock, may be associated with a value, such as an integer, decimal, string or binary value. As an example, the locks may be assigned an integer value, where the access-in lock is associated with the integer '1' and the access-all lock is associated with the integer '2'.

The first owner ID being associated with the first area allows for improved control over the ASRS. The areas being associated with owners, such as processes or users, means there is transparency relating to the reason for the controlled access. This means that users of the ASRS, and in particular, the ASRS's routing systems, can have knowledge of processes and problems with the grid that underlie the locks being in place, allowing for vehicles to be rerouted and resources to be planned accordingly. Associating areas with owner IDs also improves the safety of the ASRS. Without an owner ID being associated with the first area of the grid 100, users or processes of the ASRS may remove locks on the grid that need to remain, say, for reasons unknown to the user who removes them. For example, if a lock has been applied to an area of the grid for a long time for long-term maintenance, but other users are not aware why it needs to remain, the users may try to remove the lock so they can continue to use this area of the grid. This then may lead to safety issues, such as robots colliding with maintenance work taking place in the first area. However, this is prevented by enabling knowledge of the reasons for a locking.

Controlling access to the first area of the ASRS based on a first owner ID associated with the first area may comprise applying a first lock to the first area. Step 604 comprises controlling access to the first area by applying a first lock to the first area. To apply the access-in-lock, access-all lock, or other lock to the first area, the process or user implementing the lock may choose. enter a value in an interface of the ASRS to apply the lock.

The first lock is applied in the same processing system 400 as is used for routing the vehicles of the ASRS, in the central control system, or other system, that consists of, comprises or integrates with the routing system for movements in the ASRS. The central control system allows for the standard blocking of areas that the vehicles should not be allowed to travel to, such as blocking pillars or walls in the ASRS. The processing system 400 will then implement routing of the vehicles around standard blocks that have been identified in the central control software, such that the vehicles are not allowed to travel into blocked areas. The first lock, for example, may also be applied in the control system, such that there is selective control of vehicles access with respect to the first area. Alternatively, the first lock could be applied in the routing software itself. Unlike blocks of the central control system, controlling access to a first area of the ASRS based on a first owner ID associated with the first area enables improved management of access because the system and/or users can utilise the owner ID comprising a process and/or user ID.

The lock may be applied to control access of vehicles into, inside, and/or out of the area. Generally people are not able to access the ASRS whilst it is running, however locks may be used to allow for people to access the ASRS whilst it is running. For example, locks may be applied in areas from the access door of the ASRS to a certain area of the ASRS in order to create a path for the person to travel in during operation of the ASRS.

Controlling access to the first area of the ASRS based on a first owner ID associated with the first area may comprise removing the lock so that access into and out of the first area is unaffected by the lock. Step 606 comprises removing the lock so that access into and out of the first area is unaffected by the lock. In other words, removing the lock means that there is no longer restriction on vehicle movement into or out of the first area. Vehicles are able to pass into and out of the first area when the lock is removed. Removing the lock may comprise removing the access-in lock, the access-all lock, or other lock. In practice, the lock may be removed by setting the value associated with the lock to a different value that is associated with the lock not being present. For example, the integer value '0' may be reserved for the lock not being applied. The lock may be removed when the process is completed, or when it is deemed safe for vehicles and/or people to enter or exit the first area.

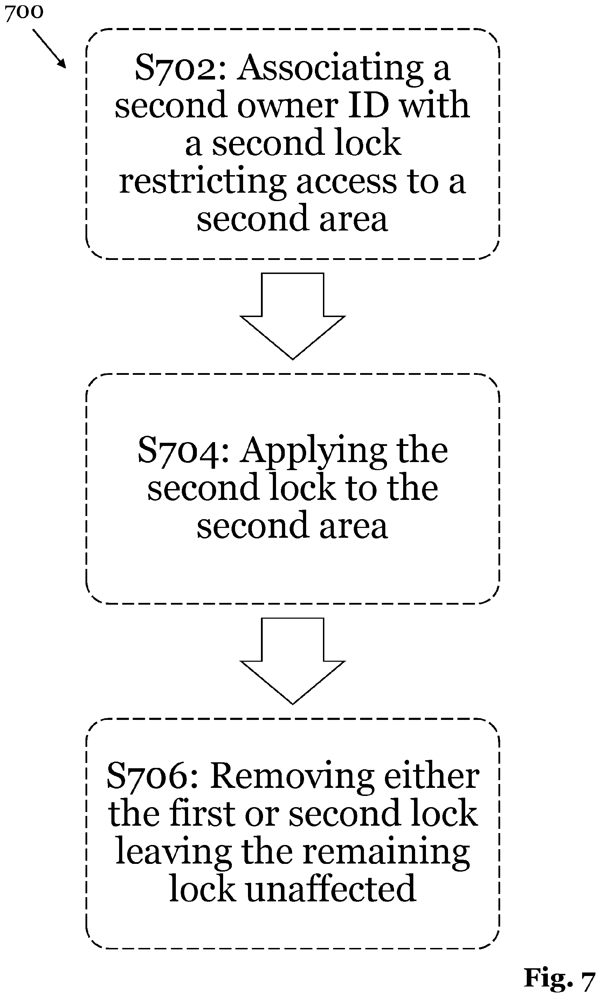

Fig 7 depicts a method 700 according to the present disclosure. Optional steps of the method 700 are shown with a dashed outline in Fig. 7. Optional steps of the method 700 are shown with a dashed outline in Fig. 7. Step 506 of Fig. 5 may comprise one or more of step 702, step 704 or step 706 of Fig. 7.

As mentioned previously in step 504 of Fig. 5 and step 602 of Fig. 6, in controlling access to the first area of the ASRS based on a first owner ID associated with the first area, controlling access comprises associating the first owner ID with a lock restricting access to the first area. Furthermore, as described with respect to step 506 in Fig. 5, the method 500 comprises controlling access to a second area based on a second owner ID associated with a second area. In controlling access to the second area based on a second owner ID, the controlling access comprises associating the second owner ID with a second lock restricting access to the second area.

Step 702 comprises associating a second owner ID with a second lock restricting access to a second area. The lock described with respect to Fig. 6 may therefore be called a first lock. In other words, the lock associated with the first area of the ASRS may be called a first lock and the lock associated with the second area of the ASRS may be called a second lock. Both the first lock and second lock may herein be referenced as a lock. Similar descriptions of the first lock may be used for the second lock.

Controlling access to the second area may comprise applying a second lock to the second area. Step 704 comprises applying a second lock to the second area. The second lock may comprise an access-in lock prohibiting access into the second area, and allowing access out of the first area or an access-all lock prohibiting access into and out of the second area. The second lock may be applied to the second area before or after the first lock is applied to the first area. The first and second areas may overlap, and therefore the first and second locks may apply in an overlapping region, as will be discussed.

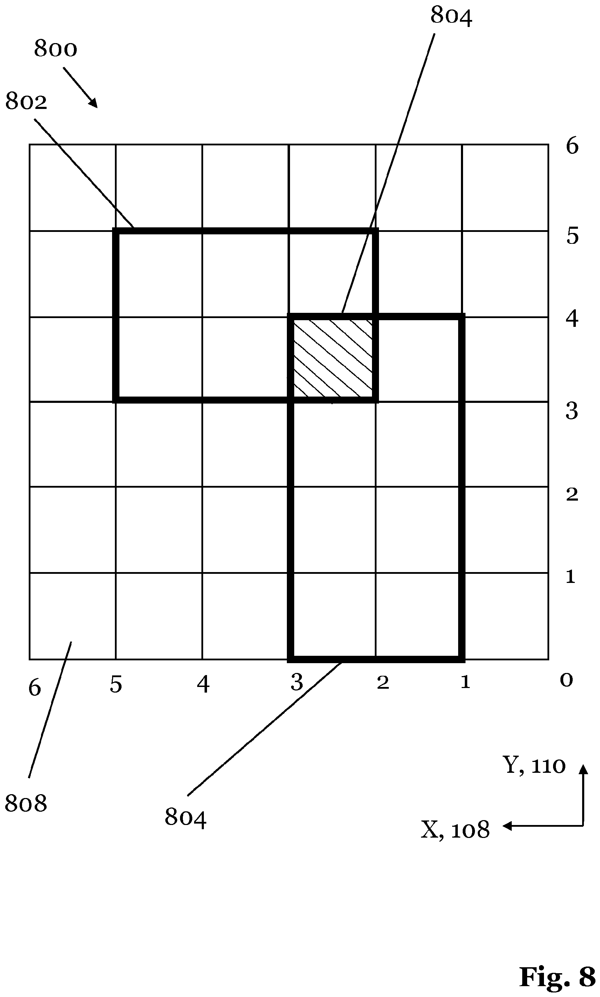

Step 706 comprises removing either the first or second lock leaving the remaining lock unaffected, when the first and second areas overlap. The remaining lock may be the first lock or the second lock. The overlapping of the first area and second area of the ASRS will be further discussed in relation to Fig. 8. In an example, there is one lock applied to the first area, a first lock, and one lock applied to the second area, a second lock. When the first area and the second area of the ASRS overlap, multiple locks are applied to the overlapping area, i.e. the first and second locks. When either the first lock to the first area or the second lock to the second area is removed, the other lock remains. This means that when the first lock to the first area is removed, the second lock to the second area remains. Similarly, when the second lock to the second area is removed, the first lock to the first area remains. Therefore, either the first lock or second lock alone, or a combination of multiple locks, on the overlapping area will allow for the overlapping area to be locked.

The remaining lock may comprise an access-in lock or access-all lock as associated with either the first lock or second lock that remains. As an example, the first lock may comprise an access-in lock and the second lock may comprise an access-all lock. In this case, the first lock will restrict movement into the first area and the second lock will restrict movement into and out of the second area. The overlapping area of the first area and the second area may have both an access-in and an access-all lock applied to the area.

There may be a hierarchy of locks indicating which locks apply over other locks. A user or system defined hierarchy may detail that a 'stricter lock' overrides one or more less strict locks applied to the overlapping area. For example, the hierarchy of locks may comprise an access-in lock and an access-all lock, where the access-all lock is the strictest lock. This means that the access-all lock overrides the access-in lock when they are both applied to the overlapping area. This means that the overlapping area will be affected by the access-all lock, and there will be a restriction of movement into and out of the overlapping area. Therefore, the overlapping area of the first area and second area may have a stricter lock than the rest of the first area or second area which has a less strict lock applied. When the second lock, comprising the access-all lock in this example, is removed from the second area, the lock applied to the first area will still comprise an access-in lock. This means that the previously overlapping region will change from having an access-all lock applying, to having an access-in lock applying, upon the removal of the second lock.

In one aspect, there may be more than two locks applied to an overlapping area. For example, there may be a first area, a second area, a third area, a fourth area and so on, identified in the ASRS and two or more of these areas may overlap in one or more overlapping regions. The first area, second area and third area may have one overlapping region between the first area, second area and third area. Alternatively, the first area and second area may overlap in one overlapping region, and the second area and third area may overlap in another overlapping region. Removal of any of the locks, will leave the remaining locks unaffected by the lock being removed.

The ability to selectively remove either the first or second lock whilst leaving the remaining lock unaffected improves the efficiency of the ASRS. As an example, applying the first lock to the first area may be used due to a temporary cleaning process, and the second lock to the second area may be used due to longer-term maintenance work, with an overlapping area between the first and second area. Without the ability to apply overlapping areas, and overlapping locks, these processes may not be able to happen simultaneously. After the temporary cleaning process in the first area is completed, the first lock can be removed, whilst leaving the second area for the longer-term maintenance work unaffected. This prevents the need for shutting down large proportions of or the entire ASRS for such processes. Furthermore, the ability to release individual locks associated with different processes or users, without the need to release all locks associated with overlapping areas, leads to safer operation of the ASRS.

Fig. 8 depicts a schematic of example areas of the ASRS. Fig. 8 depicts a grid 800 extending in a first direction X 108 and a second direction Y 110. In the schematic of Fig. 8, the grid 800 is a 6 by 6 square grid, with 36 cells 808. The cells 808 may be storage containers of the ASRS. The cells 808 in this example have a square cross-section, however they may be any suitable shape.

The first area 802 is a rectangle comprising 6 cells 808. The first area is identified using a first and second coordinate. The coordinates may be given in the form (X 108, Y 110) in order to describe areas. In this example, the first area 802 has a first coordinate of (5, 5) and a second coordinate of (2, 3), i.e. the top left corner and the bottom right corner of the rectangle. Alternatively, the first area 802 has a first coordinate of (2, 5) and a second coordinate of (5, 3), i.e. the top right corner and the bottom left corner of the rectangle. The first and second coordinate may equally be the other way around in each case, defining the same first area.

Here, the second area 804 is a rectangle comprising 8 cells 808. The second area is identified using a first and second coordinate, in the form (X 108, Y 110). The second area 806 has a first coordinate of (3, 4) and a second coordinate of (1, 0), i.e. the top left corner and the bottom right corner of the rectangle. Alternatively, the second area 806 has a first coordinate of (1, 4) and a second coordinate of (3, 0), i.e. the top right corner and the bottom left corner of the rectangle. The first and second coordinate may equally be the other way around in each case, defining the same second area.

The first area 802 and second area 804 have an overlapping region 804. The overlapping region 804 is shaded in Fig. 8. The overlapping region 804 is comprised of one cell 808. Alternatively, the overlapping region may comprise more cells depending on the relative positioning of the first area 802 and second area 804. With a first lock applied to the first area 802 and a second lock applied to the second area 804, the overlapping region is locked, preventing access inside, into and/or out of the overlapping region, depending on the type of locks applied. If either the first lock associated with the first area 802 or the second lock associated with the second area 804 is removed, the overlapping region will still be locked as the remaining lock is unaffected by the removed lock.

Each possible combination of any features from the implementations described above forms part of the present disclosure.

Aspects of the present disclosure are set out below. Each item below corresponds to an aspect of the disclosure, and each possible combination of any of the items corresponds to an aspect of the disclosure. When items are combined, two or more instances of an element with the same name are to be understood as referring to the same element, even if the element is introduced by the word "a" more than once. Each possible combination of any features from the items below with any features described above also forms part of the disclosure.
1. A computer-implemented method for managing access within an automated storage and retrieval system, ASRS, the method comprising:
   controlling access to a first area of the ASRS based on a first owner ID associated with the first area.
1a. A method for managing access within an automated storage and retrieval system, ASRS, the method comprising:
   controlling access to a first area of the ASRS based on a first owner ID associated with the first area.
1b. A computer-implemented method for managing access within an automated storage and retrieval system, ASRS, the method comprising:
   controlling access to a first area of the ASRS.
1c. A method for managing access within an automated storage and retrieval system, ASRS, the method comprising:
   controlling access to a first area of the ASRS.
1d. A computer-implemented method for managing access of a system, the method comprising:
   controlling access to a first area of the system based on a first owner ID associated with the first area.
1e. A computer-implemented method for managing access of a system, the method comprising:
   controlling access to a first area of the system.
1f. A method for managing access of a system, the method comprising:
   controlling access to a first area of the system.
1g. The method of any on of aspects 1-1f, further comprising associating first area with the first owner ID
2. The method of aspect 1, wherein the first owner ID comprises a process associated with the ASRS, or a user ID.
3. The method of aspect 1 or 2, wherein controlling access comprises associating the first owner ID with a lock restricting access to the first area.
4. The method of aspect 3, further comprising removing the lock so that access into and out of the first area is unaffected by the lock.
5. The method of any one of the preceding aspects, wherein the lock comprises an access-in lock prohibiting access into the first area, and allowing access out of the first area.
6. The method of any one of the preceding aspects, wherein the lock comprises an access-all lock prohibiting access into and out of the first area.
7. The method of any one of the preceding aspects, wherein access is of a vehicle moveable within the ASRS.
8. The method of any one of the preceding aspects, comprising identifying the first area of the ASRS using a first coordinate and a second coordinate.
9. The method of any one of the preceding aspects, wherein the first area is comprised of one or more rectangular shapes.
10. The method of any one of the preceding aspects, further comprising:
   controlling access to a second area based on a second owner ID associated with a second area.
11. The method of aspect 10 when at least dependent upon aspect 3, wherein the lock is a first lock, and controlling access comprises associating the second owner ID with a second lock restricting access to the second area.
12. The method of aspect 11, wherein controlling access to the first area comprises applying a first lock to the first area, and controlling access to the second area comprises applying a second lock to the second area, and wherein, when the first and second areas overlap, removing either the first or second lock leaves the remaining lock unaffected.
13. The method of any one of the preceding aspects, wherein the ASRS comprises a grid having a grid frame formed by first vertical storage column forming a storage volume of storage cells;
   wherein the grid comprises a rail system having:
   a first set of parallel rails arranged in a horizontal plane and extending in a first direction; and
   a second set of parallel rails arranged in the horizontal plane and extending in a second direction which is orthogonal to the first direction,
   wherein the grid comprises at least one container-handling vehicle that is configured to move along the two sets of parallel rails of the rail system of the grid.
14. The method of aspect 1, wherein the first area comprises one or more storage cells of the ASRS.
15. A computer-readable medium comprising instructions which, when executed by one or more processors, cause the one or more processors to perform the method of any preceding aspect.
16. An automated storage and retrieval system, ASRS, comprising a grid structure.
17. The system of aspect 16, comprising a grid frame formed by first vertical storage column forming a storage volume of storage cells;
   wherein the grid comprises a rail system having:
   a first set of parallel rails arranged in a horizontal plane and extending in a first direction; and
   a second set of parallel rails arranged in the horizontal plane and extending in a second direction which is orthogonal to the first direction,
   wherein the grid comprises at least one container-handling vehicle that is configured to move along the two sets of parallel rails of the rail system of the grid.
18. The method of aspect 1, further comprising:
   selecting a first area in a graphical user interface (GUI).
19. The method of aspect 18, wherein the GUI displays the first area.
20. The method of aspect 19, further comprising:
   choosing a first owner ID associated with the first area in the GUI.
21. The method aspect 20, wherein the GUI displays the owner ID and the first area.
22. A system comprising:
   a display;
   a computing device operably coupled to the display and storing instructions executable to:
      control access to a first area of an automated storage and retrieval system.
23. The system of aspect 22, further comprising:
   a user input terminal, wherein the user input terminal is configured to receive an input from a user.
24. The system of aspect 23, wherein the input from the user is a first area of an automated storage and retrieval system, ASRS.
25. The system of aspect 24, wherein the display is configured to display the input from the user.
26. The system of aspect 22, comprising:
   a first user input terminal configured to receive a first area of an automated storage and retrieval system, ASRS; and
   a second user input terminal configured to receive a first owner ID associated with the first area of the ASRS.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method for managing access within an automated storage and retrieval system, ASRS, the method comprising:
controlling access to a first area of the ASRS based on a first owner ID associated with the first area.

2. The method of claim 1, wherein the first owner ID comprises a process associated with the ASRS, or a user ID.

3. The method of claim 1 or 2, wherein controlling access comprises associating the first owner ID with a lock restricting access to the first area.

4. The method of claim 3, further comprising removing the lock so that access into and out of the first area is unaffected by the lock.

5. The method of any one of the preceding claims, wherein the lock comprises an access-in lock prohibiting access into the first area, and allowing access out of the first area.

6. The method of any one of the preceding claims, wherein the lock comprises an access-all lock prohibiting access into and out of the first area.

7. The method of any one of the preceding claims, wherein access is of a vehicle moveable within the ASRS.

8. The method of any one of the preceding claims, comprising identifying the first area of the ASRS using a first coordinate and a second coordinate.

9. The method of any one of the preceding claims, wherein the first area is comprised of one or more rectangular shapes.

10. The method of any one of the preceding claims, further comprising:
controlling access to a second area based on a second owner ID associated with a second area.

11. The method of claim 10 when at least dependent upon claim 3, wherein the lock is a first lock, and controlling access comprises associating the second owner ID with a second lock restricting access to the second area.

12. The method of claim 11, wherein controlling access to the first area comprises applying a first lock to the first area, and controlling access to the second area comprises applying a second lock to the second area, and wherein, when the first and second areas overlap, removing either the first or second lock leaves the remaining lock unaffected.

13. The method of any one of the preceding claims, wherein the ASRS comprises a grid having a grid frame formed by first vertical storage column forming a storage volume of storage cells;
wherein the grid comprises a rail system having:
a first set of parallel rails arranged in a horizontal plane and extending in a first direction; and
a second set of parallel rails arranged in the horizontal plane and extending in a second direction which is orthogonal to the first direction,
wherein the grid comprises at least one container-handling vehicle that is configured to move along the two sets of parallel rails of the rail system of the grid.

14. The method of claim 1, wherein the first area comprises one or more storage cells of the ASRS.

15. A computer-readable medium comprising instructions which, when executed by one or more processors, cause the one or more processors to perform the method of any preceding claim.
